# EUROPÄISCHE PATENTSCHRIFT

(11) **EP 3 037 702 B1**
(45) Veröffentlichungstag und Bekanntmachung des Hinweises auf die Patenterteilung: **02.09.2020**
(21) Anmeldenummer: 15201983.2
(22) Anmeldetag: 22.12.2015
(51) Int. Cl.: F16K 31/126, F15B 15/10, G05D 16/06

(54) **MEMBRANANTRIEB FÜR EIN STELLVENTIL**
MEMBRANE DRIVE FOR A CONTROL VALVE
ENTRAINEMENT DE MEMBRANE POUR UNE VANNE DE REGULATION

(30) Priorität: 22.12.2014 DE 102014119387
(43) Veröffentlichungstag der Anmeldung: 29.06.2016
(73) Patentinhaber: Samson AG, 60314 Frankfurt (DE)
(72) Erfinder: Nebel, Eugen, 61130 Nidderau (DE); Siegert, Michael, 65201 Wiesbaden (DE); Koinke, Janusz, 63179 Obershausen (DE)
(74) Vertreter: Puschmann Borchert Kaiser Klettner Patentanwälte Partnerschaft mbB

(56) Entgegenhaltungen:
- WO-A1-2008/112434
- DE-A1- 2 058 688
- DE-A1- 2 101 893
- DE-A1- 3 028 937
- DE-B- 1 068 074
- DE-C1- 4 131 708
- GB-A- 2 077 393
- GB-A- 2 118 329
- JP-A- H0 968 205
- US-A- 3 618 473
- US-A- 3 762 280

## Beschreibung

Die Erfindung betrifft einen Membranantrieb eines Stellventils gemäß Anspruch 1.

Membranantriebe sind beispielsweiseaus der US 3 936 919 bekannt, wobei insbesondere die WO 2008/112434 A1 und die US 3 762 280 A eine serielle Anordnung von Federn in einem Membranantrieb offenbart. Die DE 10 2008 032 676 A1 offenbart ein Expansionsventil, in welchem dauerhaft ein Gas in einem Druckraum eingeschlossen ist.

Die EP 2 028 377 A2 betrifft einen Membranantrieb zur Betätigung eines Stellventils. Der bekannte Membranantrieb umfasst ein Antriebsgehäuse, in der eine Membran mit einem Membranteller dichtend in dem Antriebsgehäuse fixiert ist. Dadurch wird eine Druckkammer gebildet, wobei durch Ausübung von Druck auf die Membran, wenigstens eine Federzusammengedrückt wird, welche sich gegen den Membranteller und das Antriebsgehäuse abstützt, wobei ferner der Membranteller mit einem Ventilschaft zur Betätigung eines Ventilkörpers verbunden ist. Es können mehrere Federn parallel geschaltet zwischen dem Antriebsgehäuse und dem Verbindungselement wirken.

Die DE 1 068 074 B, offenbart einen Antrieb, bei dem eine an der Membran angebrachte Ventilstange ein Klemmelement zur Durchflussteuerung betätigt. Auf der der Ventilstange abseits gelegenen Kammerseite sind zwei serielle Federn vorgesehen, die sich zwischen Membranen abstützen.

Die JP H09 68205 A offenbart einen Membranantrieb, der in der von der Ventilstange abgewandten Antriebskammer eine serielle Federanordnung, die über ein Federauflageelement verbunden ist aufweist.

Die DE 20 58 688 A1 und die DE 30 28 937 A1, offenbaren einen Antrieb, der mehrere Kammer aufweist, bei dem in zwei Kammern je eine Feder eingebracht ist, wobei eine Feder zwischen zwei Membrantellern und eine Feder zwischen Membranteller und Antriebsgehäuse liegt.

Die US 3 618 473 A offenbart eine zentral angeordnete seriell geschaltete Federnpaarung zwischen Membran und Antriebsgehäuse, wobei die Federn über ein Auflageelement verbunden sind und ein Anschlag für das Auflageelement an der Membran in der vom Ventilschaft abgewandten Membrankammer vorgesehen ist.

Sofern in Serie nur eine Feder vorgesehen ist, kann diese bei langem Verfahrweg des Ventilschafts leicht ausknicken. Um ein Ausknicken zu vermeiden kann der Außendurchmesser der Feder erhöht werden. Dies wirkt sich nachteilig auf die Einstellmöglichkeiten der Federparameter mit der der Membranteller beaufschlagt ist aus.

Es ist Aufgabe der Erfindung einen Membranantrieb anzugeben, der eine große Anpassungsfähigkeit der Federeigenschaften ermöglicht.

Die Aufgabe wird durch die Merkmale des Anspruchs 1 gelöst.

Die Unteransprüche bilden vorteilhafte Weiterbildungen der Erfindung.

Wie zuvor beschrieben umfasst ein Membranantrieb für ein Stellventil ein Antriebsgehäuse, wobei eine Membran umfassend einen Membranteller dicht in dem Antriebsgehäuse fixiert ist, wodurch eine Druckkammer zur Bewegung der Membran gebildet ist und ferner zwischen Antriebsgehäuse und Membranteller wenigstens zwei in Axialrichtung hintereinander liegende Federn vorgesehen sind, welche sich gegen den Membranteller und das Antriebsgehäuse abstützen, wobei der Membranteller mit einem Ventilschaft zur Betätigung eines Ventilkörpers verbunden ist.

Zwischen den Federn ist ein Federauflageelement vorgesehen.

Erfindungsgemäß ist vorgesehen, dass das Federauflageelement als Ringelement ausgebildet ist, durch dessen zentrale Ausnehmung der Ventilschaft ragt und dass das Federauflageelement durch mehrere Linearführungselemente, die am Umfang des Ringelements angeordnet sind, linear geführt ist, wobei die Linearführungselemente an das Antriebsgehäuse und / oder an den Membranteller angebunden sind.

Durch das linear geführte Federauflageelement wird ermöglicht, dass zwei relativ kurze Federn im Vergleich zu ihrem Außendurchmesser verwendet werden können, um entsprechende Federeigenschaften abzubilden und dennoch ein verbessertes Ausknickverhalten aufweisen.

Eine Anbindung der Linearführung sowohl an den Membranteller als auch an das Antriebsgehäuse hat den Vorteil, dass eine Verdreh-Sicherung der Membran unterstützt wird, was eine gleichmäßigere Belastung der Federn zur Folge hat.

Mehrere Federauflageelemente können von Linearführungselementen geführt werden. Diese sind insbesondere in gleichem Abstand von der Achse des Ventilschafts angeordnet.

In einer weiteren bevorzugten Ausgestaltung können die Linearführungselemente, insbesondere Linearführungsstangen koaxial zu wenigstens einer Feder liegen. Es können zur Einstellung gewünschter Federeigenschaften auch eine Mehrzahl koaxial liegender Federn unterschiedlicher Außendurchmesser vorgesehen sein.

Eine besonders einfache Ausgestaltung der Linearführung kann umfassen, dass das Federauflageelement über wenigstens eine Gleitbuchse mit wenigstens einer Führungsstange verbunden ist. Die Führungsstange kann entweder an dem Membranteller oder am Antriebsgehäuse angebracht sein, wobei die Länge der Führungsstange geringer ist als die axiale Ausdehnung von Membranteller zu gegenüberliegenden Antriebsgehäuse im drucklosen Zustand.

In einer besonders vorteilhaften Ausgestaltung kann die Linearführung als Teleskopführung ausgebildet sein. Dies ermöglicht die Verbindung des Antriebsgehäuses mit dem Membranteller und gewährleistet dennoch einen Verfahrweg über die gesamte Verfahrstrecke.

Vorzugsweise kann dann das Federauflageelement über eine Gleitbuchse mit einem ersten Teil einer Teleskopstange verbunden sein, in welchen ein zweiter Teil einer Teleskopstange einschiebbar ist.

Dies ermöglicht eine Verdreh-Sicherung der Membran und auch des Federauflageelements gegenüber dem Antriebsgehäuse.

In einer weiteren Ausgestaltung können sowohl Teleskopführungen und Führungsstangen gemischt eingesetzt werden.

Vorzugsweise können Druckfedern eingesetzt werden, was dazu führt, dass die Membran eine Druckkammer und eine Federkammer fluidisch voneinander trennt. Der Druck in der Druckkammer wirkt dann zur Bewegung des Ventils der Federkraft entgegen.

Bei einem Stellventil, das im drucklosen Zustand geöffnet ist, führt bei Verwendung von Druckfedern der Ventilschaft durch die Federkammer.

Erfindungsgemäß sind mehrere am Umfang verteilte Linearführungselemente mittels einem, insbesondere einzigen, ringförmigen Element geführt.

Das ringförmige Element kann dann mehrere einzelne miteinander verbundene Federauflageelemente umfassen.

Um den Ventilschaft kann eine zentrale Hülse angeordnet sein, die an einem vordefinierten Hub einen Anschlag für den Membranteller bereitstellt und dadurch eine Hubbegrenzung realisiert.

Die Linearführungselemente können derart eingerichtet sein, dass sie als Hubbegrenzung wirken können. So können Führungsstangen als Anschlag an einem gegenüberliegenden Gehäuseteil wirken, oder die Teleskopführungen mit entsprechenden Anschlägen versehen sein.

Gemäß einer weiteren bevorzugten Ausgestaltung umfasst das Antriebsgehäuse ein Oberteil und ein Unterteil, welche in ihrer axialen Gesamtlänge auf die Länge einer Feder eingestellt sind. Zudem ist ein Zwischenteil vorgesehen ist, dessen axiale Ausdehnung der Summe der Längen der zusätzlich zur ersten Feder eingebrachten seriellen Federn entspricht.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Schnittansicht eines Membranantriebs mit Teleskopführung
- Fig. 2: eine Detailschnittansicht einer Gleitlagerung gemäß Fig. 1, und
- Fig. 3: eine Schnittansicht eines Membranantriebs mit Führungsstangen.

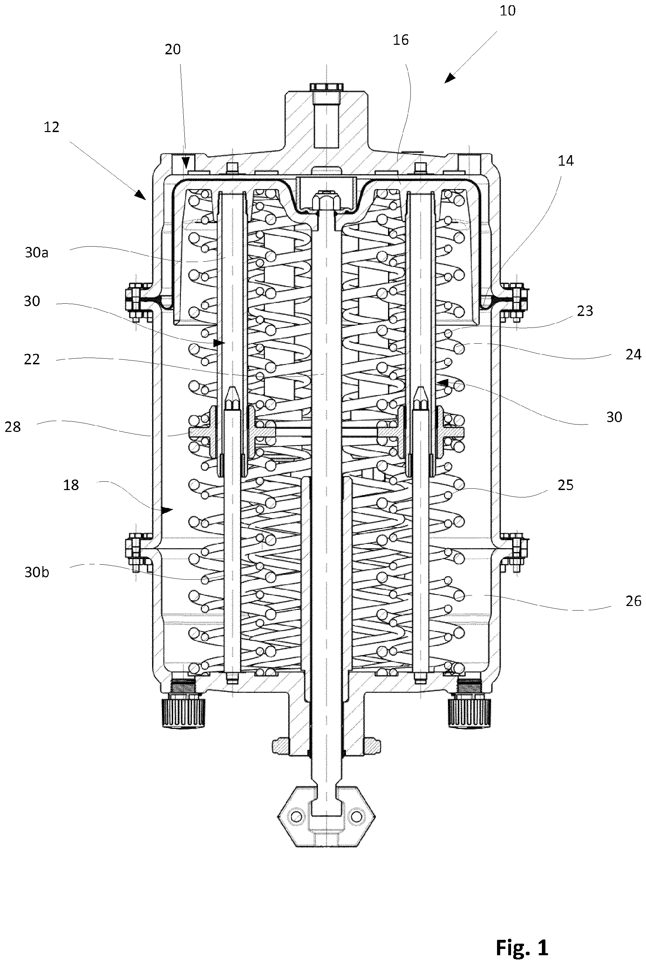

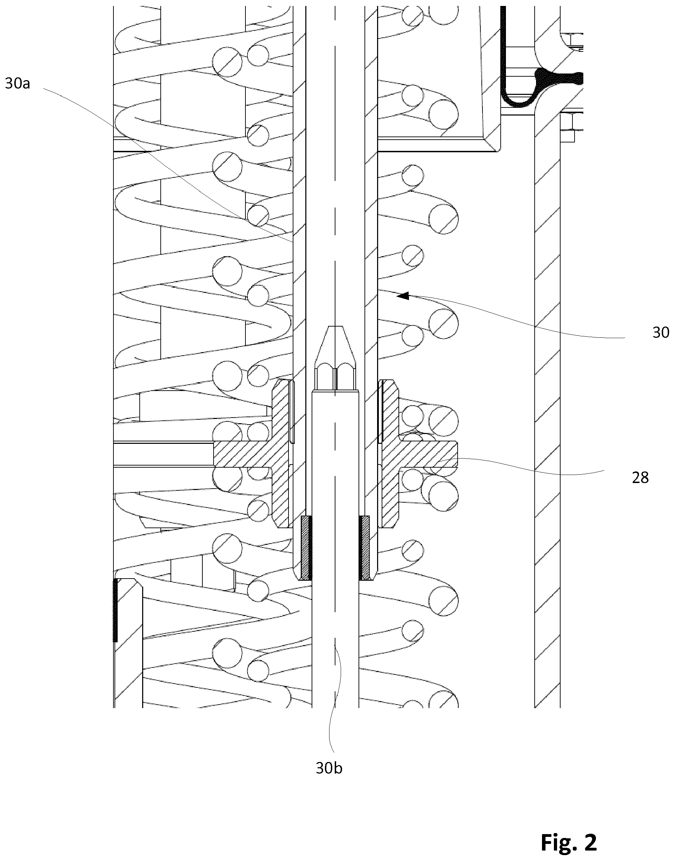

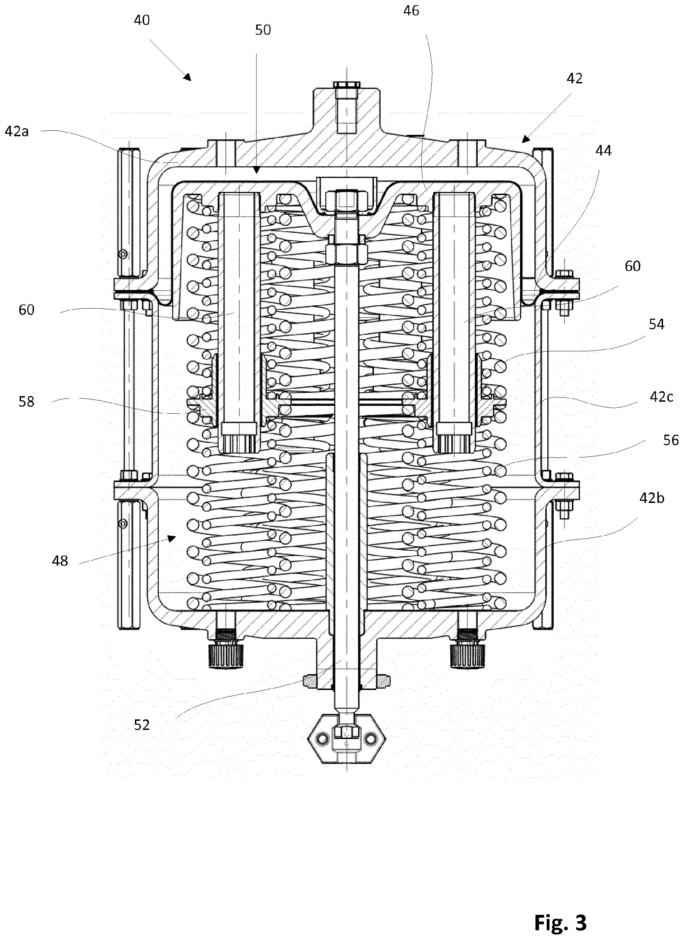

Fig. 1 zeigt einen erfindungsgemäßen Membranantrieb 10, umfassend ein Antriebsgehäuse 12, sowie eine Membran 14 umfassend einen Membranteller 16. Die Membran 14 trennt eine Federkammer 18 von einer Druckkammer 20. An der Membran 14 ist ein Ventilschaft 22 angeschlossen, der durch die Bewegung der Membran 14 eine Ventilöffnung einstellt. Zur Einstellung eines drucklosen Ausgangszustands sind Federn 24, 26 vorgesehen. Die Federn 24, 26 sind in einer Reihenschaltung angeordnet. Die zusätzlichen Federn 23, 25 sind mit den Federn 24, 26 parallel geschaltet. Es können noch weitere Federn parallel bzw. in Reihe geschaltet werden. Zwischen den Federn 23, 24, 25, 26 ist ein Federauflageelement 28 vorgesehen, welches über Teleskopstangen 30 linear geführt ist. Eine Teleskopstange 30 umfasst ein rohrförmiges Element 30a und ein zweites in dem rohrförmigen Element einschiebbar geführtes Ausziehelement 30b (siehe Fig. 2). Die übrigen Teleskopstangen 30 sind analog aufgebaut. Die Teleskopstangen 30 dienen der Verdrehsicherung zwischen dem Membranteller 16 und Antriebsgehäuse 12. Am Umfang verteilt sind mehrere Teleskopstangen 30 und Führungsstangen 60 verteilt, siehe Fig. 3 und Fig. 1. Ausschließlich Teleskopstangen 30 oder Führungsstangen 60 in einem Membranantrieb 10, 42 sind ebenfalls möglich.

Das Federauflageelement 28 ist an den rohrförmigen Elementen 30a über Gleitlager geführt Auch andere Arten von Führungen, wie Kugelumlaufführungen, sind möglich. Dies wird in Fig.2 näher beschrieben.

Aufgrund der erfindungsgemäßen Anordnung umfassend das linear geführte Federauflageelement 28 können die Federn 23, 24, 25, 26 mit einer relativ zu ihrem Außendurchmesser kurzen Länge ausgeführt sein, wodurch ein Ausknicken der Federn 23, 24, 25, 26 bei gleichem Gesamtweg reduziert werden kann.

Die Teleskopstangen 30 verbinden das Antriebsgehäuse 12 mit dem Membranteller 16. Dies führt zu einer weitgehenden Verdrehsicherung des Membrantellers 16. Die Federn 23, 24, 25, 26 sind koaxial zur Teleskopstange 30 angeordnet.

Fig. 2 zeigt eine vergrößerte Darstellung des Übergangs von rohrförmigen Element 30a, Ausziehelement 30b und Gleitlagerung des Federauflageelements 28 gegenüber dem rohrförmigen Element 30a. Insbesondere sind die jeweiligen Gleitlager in Form von Kunststofflagern ausgebildet.

Fig. 3 zeigt einen erfindungsgemäßen Membranantrieb 40, umfassend ein Antriebsgehäuse 42, sowie eine Membran 44 umfassend einen Membranteller 46. Die Membran 44 trennt eine Federkammer 48 von einer Druckkammer 50. An der Membran 44 ist ein Ventilschaft 52 angeschlossen, der durch die Bewegung der Membran 44 eine Ventilöffnung einstellt. Zur Einstellung eines drucklosen Ausgangszustands sind unter anderem Federn 54, 56 vorgesehen. Die Federn 54, 56 sind in einer Reihenschaltung angeordnet. Zwischen den Federn 54, 56 ist ein Federauflageelement 58 vorgesehen. Die Federauflageelemente 58 sind über je eine Führungsstange 60 linear geführt. Die Führungsstangen 60 sind an dem Membranteller 46 angeordnet und die axiale Länge der Führungsstangen 60 ist kürzer als die axiale Ausdehnung von der Membran 46 zur gegenüberliegenden Fläche der Federkammer im druckentlasteten Zustand.

Die einseitige Befestigung der Führungsstangen 60 hat den Vorteil, dass eine einfachere Demontage des Membranantriebs 40 möglich ist.

Zudem weist das Antriebsgehäuse 42 ein Oberteil 42a, ein Unterteil 42b und ein Zwischenstück 42c auf. Die axialen Ausdehnungen des Oberteils 42a und des Unterteils 42b sind derart auf die Länge der Federn 54 abgestimmt, so dass ein Betrieb auch ohne in Reihe zu den Federn 54 liegende Federn 56 möglich ist, indem das Zwischenstück 42c und die Führungsstangen 60 nebst Federauflageelement 58 entfernt würden. Dies erlaubt einen variablen und modularen Einsatz des Membranantriebs 40.

### Bezugszeichenliste

- 10: Membranantrieb
- 12: Antriebsgehäuse
- 14: Membran
- 16: Membranteller
- 18: Federkammer
- 20: Druckkammer
- 22: Ventilschaft
- 23: innere Federn
- 24: Federn
- 25: innere Federn
- 26: Federn
- 28: Federauflageelement
- 30: Teleskopstangen
- 30a: rohrförmiges Element
- 30b: Ausziehelement
- 40: Membranantrieb
- 42: Antriebsgehäuse
- 42a: Oberteil
- 42b: Unterteil
- 42c: Zwischenstück
- 44: Membran
- 46: Membranteller
- 48: Federkammer
- 50: Druckkammer
- 54: Federn
- 56: Federn
- 58: Federauflageelement
- 60: Führungsstangen

## Patentansprüche

1. Membranantrieb (10, 40) für ein Stellventil umfassend ein Antriebsgehäuse (12, 42), wobei eine Membran (14, 44) umfassend einen Membranteller (16, 46) dicht in dem Antriebsgehäuse (12, 42) fixiert ist, wodurch eine Druckkammer (20, 50) gebildet ist, und ferner zwischen Antriebsgehäuse(12, 42) und Membranteller (16, 46) wenigstens zwei in Axialrichtung hintereinander liegende Federn (24, 26; 54, 56) vorgesehen sind, welche sich gegen den Membranteller (16, 46) und das Antriebsgehäuse (12, 42) abstützen, wobei der Membranteller (16, 46) mit einem Ventilschaft (22, 52) zur Betätigung eines Ventilkörpers verbunden ist, wobei ferner zwischen den in Axialrichtung hintereinander liegenden Federn (24, 26; 54, 56) ein durch wenigstens ein Linearführungselement (30, 60) linear geführtes Federauflageelement (28, 58) vorgesehen ist, wobei das Federauflageelement als Ringelement (28) ausgebildet ist, durch dessen zentrale Ausnehmung der Ventilschaft (22, 52) ragt, wobei mehrere am Umfang verteilte Linearführungselemente (30, 60) an das Antriebsgehäuse (12, 42) und / oder den Membranteller (16, 46) angebunden sind.

2. Membranantrieb nach Anspruch 1, **dadurch gekennzeichnet, dass** die Linearführungselemente (30, 60) jeweils eine Teleskopstange (30) umfassen.

3. Membranantrieb nach einem der vorangehenden Ansprüche, **dadurch gekennzeichnet, dass** das Federauflageelement (28, 58) über eine jeweilige Gleitbuchse mit den Linearführungselementen (30, 60) verbunden ist.

4. Membranantrieb nach einem der vorangehenden Ansprüche 1 bis 3, **dadurch gekennzeichnet, dass** das Federauflageelement (28, 58) über eine jeweilige Gleitbuchse mit einem ersten Teil (30a) einer Teleskopstange (30) verbunden ist, in welchen ein zweiter Teil (30b) der Teleskopstange (30) einschiebbar ist.

5. Membranantrieb nach einem der vorangehenden Ansprüche, **dadurch gekennzeichnet, dass** das Antriebsgehäuse (12, 42) ein Oberteil (42a) und ein Unterteil (42b) umfasst, welche in ihrer Ausdehnung auf die Länge einer ersten Feder (54) eingestellt sind, wobei zudem ein Zwischenteil (42c) vorgesehen ist, dessen axiale Ausdehnung der Summe der Längen der zusätzlich in Reihe zur ersten Feder (54) eingesetzten wenigstens einen zweiten Feder (56) entspricht.

## Claims

1. Diaphragm actuator (10, 40) for a control valve, comprising an actuator housing (12, 42), wherein a diaphragm (14, 44) comprising a diaphragm plate (16, 46) is sealingly mounted in the actuator housing (12, 42), thus forming a pressure chamber (20, 50), and, furthermore, at least two springs (24, 26; 54, 56) which are arranged in series in the axial direction are provided between the actuator housing (12, 42) and the diaphragm plate (16, 46), which springs are supported against the diaphragm plate (16, 46) and the actuator housing (12, 42),
with the diaphragm plate (16, 46) being connected to a valve stem (22, 52) for actuating a valve body, wherein a spring support element (28, 58) is furthermore provided between the springs (24, 26; 54, 56) that are arranged in series in the axial direction, which spring support element (28, 58) is linearly guided by at least one linear guide element (30, 60), wherein the spring support element is formed as an annular element (28) having a central recess through which the valve stem (22, 52) extends, wherein a plurality of circumferentially distributed linear guide elements (30, 60) are connected to the actuator housing (12, 42) and/or the diaphragm plate (16, 46).

2. Diaphragm actuator according to claim 1, **characterized in that** the linear guide elements (30, 60) each comprise a telescopic rod (30).

3. Diaphragm actuator according to any one of the preceding claims, **characterized in that** the spring support element (28, 58) is connected to the linear guide elements (30, 60) via a respective slide bush.

4. Diaphragm actuator according to any one of claims 1 to 3 above, **characterized in that** the spring support element (28, 58) is connected, via a respective slide bush, to a first part (30a) of a telescopic rod (30) into which a second part (30b) of the telescopic rod (30) can be inserted.

5. Diaphragm actuator according to any one of the preceding claims, **characterized in that** the actuator housing (12, 42) comprises an upper part (42a) and a lower part (42b) each being of a size that is adapted to the length of a first spring (54), with an intermediate part (42c) being additionally provided which has an axial extension that is equal to the sum of the lengths of said at least one second spring (56) additionally inserted in series with said first spring (54).

## Revendications

1. Entraînement de membrane (10, 40) pour une vanne de régulation comprenant un carter d'entraînement (12, 42), dans lequel une membrane (14, 44) comprenant un plateau de membrane (16, 46) est hermétiquement fixée dans le carter d'entraînement (12, 42) moyennant quoi une chambre de pression (20, 50) est conçue, et en outre sont prévus, entre le carter d'entraînement (12, 42) et le plateau de membrane (16, 46), au moins deux ressorts (24, 26 ; 54, 56) se situant les uns derrières les autres dans la direction axiale, lesquels s'appuient contre le plateau de membrane (16, 46) et le carter d'entraînement (12, 42), dans lequel le plateau de membrane (16, 46) est relié à une tige de soupape (22, 52) en vue d'actionner un corps de soupape, dans lequel en outre est prévu, entre les ressorts (24, 26 ; 54, 56) se situant les uns derrières les autres dans la direction axiale, un élément de support de ressort (28, 58) guidé de façon linéaire par au moins un élément de guidage linéaire (30, 60), dans lequel l'élément de support de ressort est conçu en tant qu'élément annulaire (28) au travers de l'évidement central duquel la tige de soupape (22, 52) fait saillie, dans lequel plusieurs éléments de guidage linéaire (30, 60) répartis sur le pourtour sont rattachés contre le carter d'entraînement (12, 42) et/ou le plateau de membrane (16, 46).

2. Entraînement de membrane selon la revendication 1, **caractérisé en ce que** les éléments de guidage linéaire (30, 60) comprennent respectivement une perche télescopique (30).

3. Entraînement de membrane selon l'une des revendications précédentes, **caractérisé en ce que** l'élément de support de ressort (28, 58) est relié aux éléments de guidage linéaire (30, 60) via une douille de glissement respective.

4. Entraînement de membrane selon l'une des revendications précédentes 1 à 3, **caractérisé en ce que** l'élément de support de ressort (28, 58) est relié via une douille de glissement respective à une première partie (30a) d'une perche télescopique (30), dans laquelle première partie une seconde partie (30b) de la perche télescopique (30) peut être insérée.

5. Entraînement de membrane selon l'une des revendications précédentes, **caractérisé en ce que** le carter d'entraînement (12, 42) comprend une partie supérieure (42a) et une partie inférieure (42b), lesquelles sont réglées pour leur extension sur la longueur d'un premier ressort (54), dans lequel de surcroît est prévue une partie intermédiaire (42c) dont l'extension axiale correspond à la somme des longueurs d'au moins un deuxième ressort (56) utilisés de façon complémentaire en série par rapport au premier ressort (54).
